# EUROPÄISCHE PATENTSCHRIFT

(11) **EP 1 589 642 B1**
(45) Veröffentlichungstag und Bekanntmachung des Hinweises auf die Patenterteilung: **22.09.2010**
(21) Anmeldenummer: 04011494.4
(22) Anmeldetag: 14.05.2004
(51) Int. Cl.: H02K 41/025, B21C 1/32, H02K 1/12

(54) **Vorrichtung zum Umformen von stangenförmigen oder rohrförmigen elektrisch leitenden oder magentisierbaren Werkstücken**
Apparatus for shaping of bar-shaped or tubular electrically conductive or magnetisable workpieces
Appareil pour donner une forme de barre ou de tube à un objet magnetisable ou électro-conducteur

(30) Priorität: 22.04.2004 DE 102004020224
(43) Veröffentlichungstag der Anmeldung: 26.10.2005
(73) Patentinhaber: BL Chemie GmbH & Co. KG, 58809 Neuenrade (DE)
(72) Erfinder: Witte, Werner, 59425 Unna (DE); Bilstein, Peter, 58708 Menden (DE); Illgen, Lothar, 58640 Iserlohn (DE); Oswald, Bernhard, 63893 Miltenberg (DE)
(74) Vertreter: Graefe, Jörg

(56) Entgegenhaltungen:
- DE-A- 10 115 389
- US-A- 3 911 706
- MIN HU ET AL.: "A Digital Miniature Pump for Medical Applications" IEEE ASME TRANSACTIONS ON MECHATRONICS, Bd. 7, Nr. 4, 4. Dezember 2002 (2002-12-04), Seiten 519-520, XP002301490
- ANONYMOUS: "Precision Powder Injection Molding" INTERNET ARTICLE, [Online] XP002301491 Gefunden im Internet: <URL:www3.kawa.co.jp/eng/prod-tech/technol ogy/technology08_html> [gefunden am 2004-10-14]
- BLOMQVIST, INGVAR: "Magnetic Design of a 20 mm Hybrid Undulator" 16. Januar 2003 (2003-01-16) , CANADIAN LIGHT SOURCE INC , 101 PERIMETER ROAD, UNIVERSITY OF SASKATCHEWAN, SASKATOON, SASKATCHEWAN, CANADA XP002301492 * Seite 3, Absatz 3.2 *

## Beschreibung

Die Erfindung betrifft eine Vorrichtung zum Umformen von stangenförmigen und/oder rohrförmigen elektrisch leitenden und ggf. magnetisierbaren Gütern, insbesondere eine Vorrichtung zum Durchziehen oder Durchdrücken.

Aus der Druckpatentschrift mit der Nummer US 3,911,706 A ist eine Vorrichtung der eingangs genannten Art bekannt, welche einen Induktor eines elektrischen Linearmotors aufweist. Dieser Induktor umfasst Spulen, die axial nebeneinander angeordnet sind, so dass das freibleibende Zentrum der Spulen einen Kanal ausbildet. In diesen Kanal wird das umzuformende stangen- oder rohrförmige Gut eingebracht, welches elektrisch leitend und ggf. magnetisierbar ist. Dieses Gut bildet dann den Anker des Linearmotors. Durch das Erzeugen eines magnetischen Wanderfelds in dem Kanal des Induktors wird der Anker, d. h. das umzuformende Gut in dem Kanal fortbewegt. Bei einer entsprechenden Leitung des Induktors kann dabei das umzuformende Gut durch die Düse einer Vorrichtung der eingangs genannten Art bewegt werden, wodurch das Gut umgeformt wird.

Die genannte Druckschrift mit der Nummer US 3,911,706 A offenbart eine Linearziehmaschine zum Durchziehen eines stangenförmigen Guts durch die Ziehdüse einer Matrize. Dazu ist in Ziehrichtung hinter der Ziehdüse liegend der Induktor angeordnet. Das auf nicht näher offenbarte Art und Weise in die Ziehdüse eingeführte stangenförmige Gut wird in Ziehrichtung hinter der Ziehdüse durch den Induktor geführt, wodurch der Induktor in Wechselwirkung mit dem als Anker wirkenden stangenförmigen Ziehgut einen Linearmotor bildet, welcher das stangenförmige Ziehgut durch die Ziehdüse hindurchzieht und so die notwendige Kraft für den Umformprozess aufbringt.

Der Nachteil der in der genannten Druckschrift offenbarten Ziehvorrichtung ist, dass die von dem Induktor in Wechselwirkung mit dem Ziehgut erzeugten Kräfte nur dann ausreichend für einen Umformungsvorgang, insbesondere größerer Ziehgüter sind, wenn der Induktor eine Länge von mehreren 100 m aufweist. Eine derartige Ziehmaschine ist jedoch unrealistisch, da sie zu vertretbaren Kosten nicht herzustellen und zu betreiben ist.

Ein weiterer Nachteil ist, dass die Vorrichtung wegen der durch den Induktor vorgegebenen Kanalgröße nur für Ziehgüter eines Durchmessers oder eines Bereichs von Durchmessern ausgelegt ist.

Der vorliegenden Erfindung lag daher die Aufgabe zugrunde, eine Vorrichtung zum Umformen von rohrförmigem oder stangenförmigem Ziehgut der eingangs genannten Art so weiterzuentwickeln, dass auch mit kleineren Maschinen Kräfte aufgebracht werden können, um die Umformung des rohrförmigen oder stangenförmigen Guts zu erreichen. Ferner soll die Vorrichtung auch für Ziehgüter verschiedener Durchmesser oder Durchmesserbereiche geeignet sein.

Diese Aufgabe wird durch eine erfindungsgemäße Vorrichtung nach Anspruch 1 gelöst. Demnach weist eine erfindungsgemäße Vorrichtung zum Umformen von stangen- und/oder rohrförmigen Gütern, ein oder mehrere Mittel zum Leiten von magnetischem Fluss auf, die in dem Kanal herausnehmbar angeordnet sind. Eine erfindungsgemäße Vorrichtung weist als erstes Mittel zum Leiten des magnetischen Flusses ein Rohr auf. Das Rohr muss, damit es in den Kanal einführbar ist, einen Außendurchmesser haben, der nicht größer ist als der Innendurchmesser des Kanals. Vorteilhaft ist der Außendurchmesser jedoch genauso groß oder nur geringfügig kleiner als der Durchmesser des Kanals. Ferner hat das Rohr einen Innendurchmesser, der geringfügig größer ist als das umzuformende Gut. Insgesamt soll erreicht werden, dass der Luftspalt, der zwischen der Innenwand des Kanals und dem umzuformenden Gut möglichst klein ist und möglichst mit dem Mittel zum Leiten des magnetischen Flusses ausgefüllt ist.

Untersuchungen an einer Vorrichtung zum Umformen der eingangs genannten Art hatten gezeigt, dass der magnetische Fluss nicht optimal in, beziehungsweise durch das umzuformende rohrförmige oder stangenförmige Gut geleitet wird, um eine optimale Kraft zu erzeugen, die auf das umzuformende Gut einwirkt, um dieses zu bewegen. Ursächlich dafür waren Luftspalten, die zum Beispiel zwischen der inneren Wandung des Kanals und der äußeren Fläche des umzuformenden Guts verbleiben. Experimente haben nun gezeigt, dass durch das Einbringen eines Mittels zum Leiten des magnetischen Flusses in den Kanal der magnetische Fluss in dem umzuformenden rohrförmigen beziehungsweise stangenförmigen Gut so gebündelt wird, dass die Kraft, welche auf das umzuformende Gut einwirkt, um einen Faktor größer als zehn vergrößert werden kann. Dadurch lässt sich dann eine deutliche Reduzierung der Baugröße der Vorrichtung der eingangs genannten Art erreichen. Eine erfindungsgemäße Vorrichtung ist dadurch kompakter und kann deutlich wirtschaftlicher betrieben werden.

Das Rohr hat erste Abschnitte aus magnetisierbarem, insbesondere weichmagnetischem Material und zweite Abschnitte aus nicht magnetisierbarem Material. Dabei sind die Abschnitte vorteilhaft hülsenartig ausgebildet. Die Abschnitte eines Rohrs einer erfindungsgemäßen Vorrichtung sind koaxial nebeneinander angeordnet. Die Abschnitte ergeben so insgesamt das Rohr.

Das Material der ersten Abschnitte einer erfindungsgemäßen Vorrichtung kann ein Metall insbesondere Eisen sein oder aber ein Material sein, das Metall und insbesondere Eisen enthält. Bei dem Material kann es sich auch um Kobalt, Nickel oder Kobalt-, Nickel- oder Eisenlegierungen handeln. Das Material hat vorteilhaft eine hohe Sättigungsfeldstärke. Es kann sich bei dem Material um ein Pulvermetall handeln. Das Material kann ebenso pulvergesintert sein oder aus laminierten Schichten aufgebaut sein. Es kann ebenso in Längsrichtung geschlitzt sein.

Das Material, aus dem die zweiten Abschnitte hergestellt sind, kann vorteilhaft ein Kunststoff sein.

Durch die abwechselnde Anordnung der Abschnitte kann erreicht werden, dass der magnetische Fluss gebündelt dem umzuformenden Gut zugeleitet wird.

Der Induktor einer erfindungsgemäßen Vorrichtung kann gelochte Scheiben umfassen, die koaxial zu den Spulen zwischen den Spulen angeordnet sind und die mit den Spulen zusammen den Kanal des Induktors ausbilden. Durch die Scheiben wird erreicht, dass der magnetische Fluss, der durch die Spulen des Induktors erzeugt wird, auch in den Bereichen zwischen den Spulen gebündelt wird. Die Scheiben können einen radialen Schlitz aufweisen. Sind bei dem Induktor die Scheiben vorgesehen, ist es vorteilhaft, wenn die zweiten Abschnitte des Rohrs eine Breite haben, die der Breite der Spulen entspricht. Das Rohr ist vorteilhaft so in den Induktor eingeschoben, dass die zweiten Abschnitte in Flucht mit den Spulen liegen, und die ersten Abschnitte in Flucht mit den Scheiben liegen.

Bei rohrförmigen Gütern hat sich ferner gezeigt, dass der Hohlraum innerhalb des Rohres dazu führt, dass der magnetische Fluss nicht optimal durch das umzuformende rohrförmige Gut hindurchgeleitet wird. Führt man stattdessen ein zweites Mittel zum Leiten des magnetischen Flusses in Form eines Zylinders in den Induktor einer Vorrichtung der eingangs genannten Art ein, führt dies dazu, dass der Fluss in optimaler Ausrichtung durch das umzuformende rohrförmige Gut hindurchgeleitet wird. Der Zylinder, der als zweites Mittel zum Leiten des magnetischen Flusses in dem Induktor angeordnet ist, ist vorteilhaft koaxial zu den Spulen in dem Kanal angeordnet.

Der Zylinder einer erfindungsgemäßen Vorrichtung ist vorteilhaft so dimensioniert, dass zwischen dem Zylinder und einer inneren Wandfläche des Kanals oder der inneren Wandfläche des ersten Mittels ein möglichst kleiner Spalt zum Ein- und Durchführen des umzuformenden rohrförmigen Guts verbleibt.

Gemäß der Erfindung kann der Zylinder ein Hohlzylinder sein.

Der Zylinder ist vorteilhaft aus einem Material hergestellt, das ein Metall, insbesondere Eisen umfasst. Bei dem Material kann es sich auch um Kobalt, Nickel oder Kobalt-, Nickel- oder Eisenlegierungen handeln. Das Material hat vorteilhaft eine hohe Sättigungsfeldstärke. Ferner ist es möglich, dass der Zylinder aus einem Pulvermetall hergestellt ist. Das Material kann ebenso pulvergesintert sein oder aus laminierten Schichten aufgebaut sein. Es kann ebenso in Längsrichtung geschlitzt sein.

Der Zylinder kann über mechanische und/oder elektromagnetische Haltemittel zum Beispiel am Ziehdorn gehalten werden. Der Zylinder aus einem weichmagnetischen und ferromagnetischen Material kann beispielsweise z.B. durch die Spulen des Induktors oder weiterer Spulen gehalten werden, wobei die Spulen von einem Wechselstrom oder einem Gleichstrom durchflossen werden.

Mit einer erfindungsgemäßen Vorrichtung ist vorteilhaft ein elektromagnetisches Wanderfeld erzeugbar, das eine magnetische Flussdichte mit einem Gradienten in axialer Richtung des Kanals hat, der eine Amplitude von größer als B = 1 T hat. Die mit den Spulen des Induktors erzeugbare elektrische Stromdichte ist vorteilhaft größer als J = 10 A/mm².

Die Spulen können zumindest teilweise Leiter aufweisen, die einen spezifischen Widerstand von ρ = 0,017 x 10⁻⁶ Ωm oder weniger haben. Die Spulen können zumindest teilweise Leiter aufweisen, die supraleitend sind. Die supraleitenden Leiter solcher Spulen können aus einem Material bestehen, welches eine Sprungtemperatur von größer als T = 77 K hat.

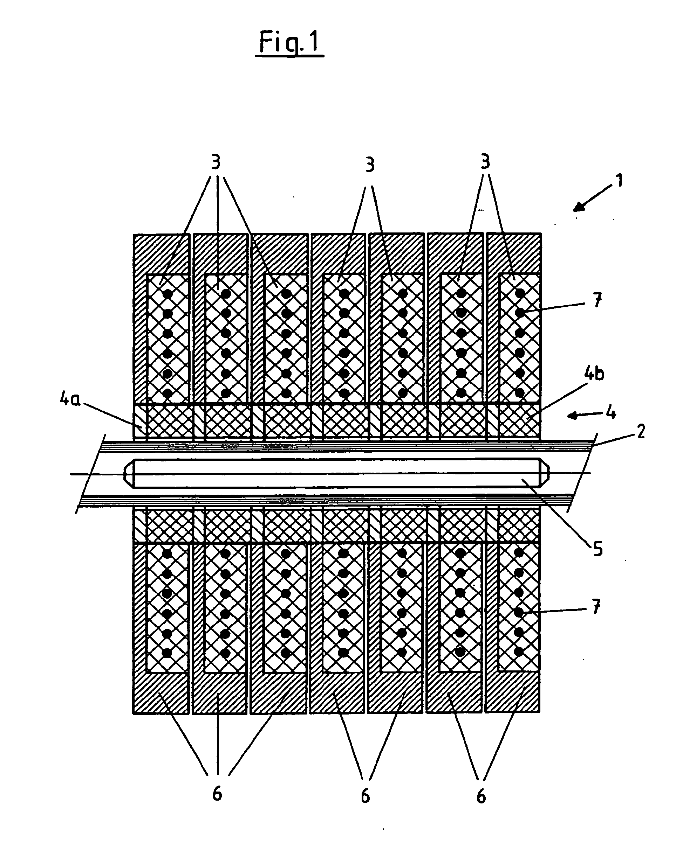

Ein Ausführungsbeispiel für einen Induktor einer erfindungsgemäßen Vorrichtung ist anhand der Zeichnung näher beschrieben. Darin zeigt
- Fig. 1: den erfindungsgemäßen Induktor mit einem ersten und einem zweiten Mittel zum Leiten und einem rohrförmigen Ziehgut.

Der in Fig. 1 dargestellte erfindungsgemäße Induktor 1 eines Linearmotors weist Spulen 3 auf, die koaxial nebeneinander angeordnet sind. Zwischen diesen Spulen 3 sind gelochte Scheiben 6 angeordnet, die den äußeren Rand der Spulen übergreifen. Die Scheiben übergreifen die Spulen 3 so, dass der überkragende Rand der Scheiben 6, bündig mit der Spule abschließt. Scheibe 6 und die darin eingebettete Spule 3 bilden somit einen Körper, der einen Ring mit rechteckigem Querschnitt bildet. Sind diese Körper aus Scheibe 6 und Spule 3 nebeneinander angeordnet, ergibt es sich, dass die Spulen mit Ausnahme auf der Innenseite vollständig von der unmittelbar zugeordneten Scheibe 6 oder einer benachbarten Scheibe 6 eingeschlossen sind.

Die Spulen 3 und die Scheiben 6 bilden zusammen einen Kanal aus, durch welches das umzuformende Gut 2 transportiert wird. Der Transport erfolgt dabei durch Kräfte, die aufgrund von elektromagnetischer Induktion und Gegeninduktion auf das Gut 2 wirken.

Die Scheiben 6 sind aus einem Pulvermetall hergestellt. Die Scheiben dienen dazu, den durch die Spulen erzeugten magnetischen Fluss zu bündeln und zu leiten.

Wird nun in den Kanal das umzuformende Gut eingeführt und hat dieses umzuformende Gut 2 einen Außendurchmesser der erheblich kleiner ist als der Innendurchmesser des Kanals, führt dies dazu, dass der magnetische Fluss zum Teil durch den verbleibenden Luftspalt zwischen dem umzuformenden Gut 2 und der inneren Wandung des Kanals und nicht durch das umzuformende Gut 2 selbst geleitet wird.

Um dies zu verhindern, ist das erste Mittel 4 in Kanal eingeschoben. Dabei handelt es sich um ein Rohr 4, welches aus ersten Abschnitten 4a und zweiten Abschnitten 4b besteht, die hülsenartig ausgebildet sind und koaxial nebeneinander so angeordnet sind, dass sie ein Rohr bilden. Dieses Rohr hat einen Außendurchmesser, der dem Innendurchmesser des Kanals entspricht. Der Innendurchmesser des Rohrs entspricht dagegen ungefähr dem Außendurchmesser des umzuformenden Guts 2. Die ersten Abschnitte 4a des Rohrs 4 sind ebenfalls aus einem Pulvermetall hergestellt. Damit können diese ersten Abschnitte ebenso wie die Scheiben 6 den magnetischen Fluss der durch die Spulen 3 erzeugt wird, bündeln und leiten. Die zweiten Abschnitte 4b sind dagegen aus einem Kunststoff hergestellt. Diese können den magnetischen Fluss nicht bündeln. Die ersten Abschnitte 4a des Rohrs 4 bilden, sofern das Rohr 4 in den Kanal eingeschoben ist, eine Brücke über den ansonsten verbleibenden Luftspalt, was zu einer optimalen Führung des magnetischen Flusses führt. Der magnetische Fluss kann gebündelt in das umzuformende Gut 2 eingeleitet werden.

Bei dem in der Fig.1 dargestellten umzuformenden Gut handelt es sich um ein rohrförmiges Gut 2. Der freibleibende Innenraum in dem rohrförmigen Gut 2 ist ebenfalls nicht optimal für die Erzeugung der Kraft, die auf das umzuformende Gut 2 einwirkt. Deshalb hat man gemäß der Erfindung ein zweites Mittel zum Leiten in den Kanal eingeführt. Dieses zweite Mittel wird durch einen Zylinder 5 gebildet, der einen Durchmesser hat, der kleiner ist als der Innendurchmesser des umzuformenden Guts. Damit würde, sofern das umzuformende Gut 2 nicht in den Kanal eingeführt ist, ein Spalt zwischen dem Zylinder 5 und dem Rohr 4 beziehungsweise der inneren Wandung des Kanals verbleiben, in welchen ein rohrförmiges, umzuformendes Gut eingeführt werden kann. Der Zylinder 5, bei dem es sich auch um einen Hohlzylinder handeln kann, ist ebenfalls aus einem Pulvermetall hergestellt und der Zylinder führt, wie auch die ersten Abschnitte 4a und die Scheiben 6 zu einem gebündelten magnetischen Fluss. Dadurch wird erreicht, dass der magnetische Fluss das umzuformende rohrförmige Gut 2 im Wesentlichen radial durchfließt, was optimal für die Krafterzeugung ist.

## Patentansprüche

1. Vorrichtung zum Umformen von stangenförmigen und/oder rohrförmigen elektrisch leitenden und/oder magnetisierbaren Gütern (2), insbesondere zum Durchziehen oder Durchdrücken wobei
- die Vorrichtung (3) einen Induktor (1) eines elektrischen Linearmotors aufweist, mit welchem ein elektromagnetisches Wanderfeld erzeugbar ist,
- der Induktor (1) axial nebeneinander angeordnete Spulen (3) umfasst,
- die Spulen (3) einen Kanal ausbilden,
- die Vorrichtung ein oder mehrere Mittel (4, 5) zum Leiten von magnetischem Fluss umfasst, die in dem Kanal herausnehmbar angeordnet sind und
- ein erstes Mittel zum Leiten ein Rohr (4) ist,
**dadurch gekennzeichnet, dass**
- das Rohr erste Abschnitte (4a) aus magnetisierbarem Material und zweite Abschnitte (4b) aus nicht magnetisierbarem Material hat,
- das Rohr (4a) einen Außendurchmesser aufweist, der genauso groß oder kleiner ist als der Durchmesser des Kanals und
- das Rohr (4a) einen Innendurchmesser hat, der größer ist als das umzuformende Gut.

2. Vorrichtung nach Anspruch 1, **dadurch gekennzeichnet, dass** die Abschnitte (4a, b) hülsenartig ausgebildet sind.

3. Vorrichtung nach Anspruch 1, **dadurch gekennzeichnet, dass** die Abschnitte (4a, b) koaxial nebeneinander angeordnet sind.

4. Vorrichtung nach einem der Ansprüche 1 bis 3, **dadurch gekennzeichnet, dass** das Material der ersten Abschnitte (4a) ein vorzugsweise weichmagnetisches Metall, insbesondere Eisen ist oder enthält.

5. Vorrichtung nach einem der Ansprüche 1 bis 4, **dadurch gekennzeichnet, dass** das Material der zweiten Abschnitte (4b) ein Kunststoff ist.

6. Vorrichtung nach einem der Ansprüche 1 bis 5, **dadurch gekennzeichnet, dass** der Induktor (1) Scheiben (6) umfasst, die koaxial zu den Spulen (3) zwischen den Spulen (3) angeordnet sind und die mit den Spulen (3) den Kanal ausbilden.

7. Vorrichtung nach Anspruch 6, **dadurch gekennzeichnet, dass** die zweiten Abschnitte (4b) des Rohrs (4) eine Breite haben, die der Breite der Spulen (3) entspricht oder kleiner als diese Breite ist.

8. Vorrichtung nach einem der Ansprüche 1 bis 7, **dadurch gekennzeichnet, dass** ein zweites Mittel zum Leiten ein Zylinder (5) ist.

9. Vorrichtung nach Anspruch 8, **dadurch gekennzeichnet, dass** der Zylinder (5) koaxial zu den Spulen (3) in dem Kanal angeordnet ist.

10. Vorrichtung nach Anspruch 8 oder 9, **dadurch gekennzeichnet, dass** die Vorrichtung zwischen dem Zylinder (5) und einer inneren Wandfläche des Kanals oder des Rohrs (4a) ein Spalt zum Ein- und Durchführen des umzuformenden Guts (2) aufweist.

11. Vorrichtung nach einem der Ansprüche 8 bis 10, **dadurch gekennzeichnet, dass** der Zylinder (5) ein Hohlzylinder ist.

12. Vorrichtung nach einem der Ansprüche 8 bis 1 1 , **dadurch gekennzeichnet, dass** der Zylinder (5) aus einem Material hergestellt ist, das ein weichmagnetisches Metall, insbesondere Eisen umfasst.

13. Vorrichtung nach einem der Ansprüche 8 bis 12, **dadurch gekennzeichnet, dass** der Zylinder (5) aus Pulvermetall hergestellt, pulvergesintert oder aus Schichten laminiert ist und/oder längsgeschlitzt ist.

14. Vorrichtung nach einem der Ansprüche 1 bis 13, **dadurch gekennzeichnet, dass** mit den Spulen (3) elektrische Stromdichten von größer als J = 10 A/mm² erzeugbar sind.

15. Vorrichtung nach einem der Ansprüche 1 bis 14, **dadurch gekennzeichnet, dass** die Spulen (3) zumindest teilweise Leiter (7) aufweisen, die einen spezifischen Widerstand von ρ = 0,017 x 10⁻⁶ Ωm oder weniger haben.

16. Vorrichtung nach einem der Ansprüche 1 bis 15, **dadurch gekennzeichnet, dass** die Spulen zumindest teilweise Leiter aufweisen, die supraleitend sind.

17. Vorrichtung nach Anspruch 16, **dadurch gekennzeichnet, dass** die supraleitenden Leiter aus einem Material bestehen, welche eine Sprungtemperatur von größer als T = 77 K hat.

18. Vorrichtung nach einem der Ansprüche 8 bis 17, **dadurch gekennzeichnet, dass** der Zylinder über mechanische und/oder elektromagnetische Haltemittel gehalten ist.

## Claims

1. Apparatus for forming rod-shaped and/or tubular, electrically conductive and/or magnetizable materials (2), in particular for drawing or extruding, wherein
- the apparatus (3) has an inductor (1) of an electric linear motor, by means of which a traveling electromagnetic field can be produced;
- the inductor (1) comprises coils (3) which are arranged axially next to one another;
- the coils (3) form a channel;
- the apparatus comprises one or more means (4, 5) for conducting a magnetic flux which are arranged in the channel such that they can be removed, and
- a first conducting means is a tube (4),
**characterized in that**
- the tube has first sections (4a) made of a magnetizable material and second sections (4b) made of a non-magnetizable material,
- the tube (4a) has an outer diameter which is the same as or smaller than the diameter of the channel, and
- the tube (4a) has an inner diameter which is larger than the material to be reformed.

2. Apparatus according to Claim 1, **characterized in that** the sections (4a, b) are in the form of sleeves.

3. Apparatus according to Claim 1, **characterized in that** the sections (4a, b) are arranged coaxially next to one another.

4. Apparatus according to one of Claims 1 to 3, **characterized in that** the material of the first sections (4a) is or contains a preferably soft-magnetic metal, in particular iron.

5. Apparatus according to one of Claims 1 to 4, **characterized in that** the material of the second sections (4b) is a plastic.

6. Apparatus according to one of Claims 1 to 5, **characterized in that** the inductor (1) comprises disks (6), which are arranged between the coils (3) coaxially with respect to the coils (3) and which form, with the coils (3), the channel.

7. Apparatus according to Claim 6, **characterized in that** the second sections (4b) of the tube (4) have a width which corresponds to the width of the coils (3) or is smaller than this width.

8. Apparatus according to one of Claims 1 to 7, **characterized in that** a second conducting means is a cylinder (5).

9. Apparatus according to Claim 8, **characterized in that** the cylinder (5) is arranged in the channel coaxially with respect to the coils (3).

10. Apparatus according to Claim 8 or 9, **characterized in that** the apparatus has, between the cylinder (5) and an inner wall face of the channel or of the tube (4), a gap for inserting and passing through the material (2) to be formed.

11. Apparatus according to one of Claims 8 to 10, **characterized in that** the cylinder (5) is a hollow cylinder.

12. Apparatus according to one of Claims 8 to 11, **characterized in that** the cylinder (5) is produced from a material which comprises a soft-magnetic metal, in particular iron.

13. Apparatus according to one of Claims 8 to 12, **characterized in that** the cylinder (5) is produced from powder metal, is powder-sintered or is laminated from layers and/or provided with longitudinal slots.

14. Apparatus according to one of Claims 1 to 13, **characterized in that**, using the coils (3), electrical current densities of greater than J = 10 A/mm² can be produced.

15. Apparatus according to one of Claims 1 to 14, **characterized in that** at least some of the coils (3) have conductors (7) which have a resistivity of ρ = 0.017 × 10⁻⁶ Ωm or less.

16. Apparatus according to one of Claims 1 to 15, **characterized in that** at least some of the coils have conductors which are superconductive.

17. Apparatus according to Claim 16, **characterized in that** the superconductive conductors are made of a material which has a critical temperature of greater than T = 77 K.

18. Apparatus according to one of Claims 8 to 17, **characterized in that** the cylinder is retained by means of mechanical and/or electromagnetic retaining means.

## Revendications

1. Dispositif de façonnage de produits (2) en forme de barre et/ou de tube, électriquement conducteurs et/ou magnétisables, en particulier dispositif de tréfilage ou d'extrusion, dans lequel
- le dispositif (3) présente un inducteur (1) d'un moteur linéaire qui permet de produire un champ d'ondes électromagnétiques progressives,
- l'inducteur (1) comprend des bobines (3) disposées axialement les unes à côté des autres,
- les bobines (3) formant un canal,
- le dispositif présente un ou plusieurs moyens (4, 5) qui conduisent le flux magnétique et disposés de manière amovible dans le canal et
- un premier moyen de guidage est un tube (4),
**caractérisé en ce que**
- le tube présente des premières parties (4a) en matériau magnétisable et des deuxièmes parties (4b) en matériau non magnétisable,
- **en ce que** le diamètre extérieur du tube (4a) est inférieur ou égal au diamètre du canal et
- **en ce que** le diamètre intérieur du tube (4a) est plus grand que celui du produit à façonner.

2. Dispositif selon la revendication 1, **caractérisé en** de que les parties (4a, b) ont une configuration de douille.

3. Dispositif selon la revendication 1, **caractérisé en ce que** les parties (4a, b) sont disposées coaxialement l'une à côté de l'autre.

4. Dispositif selon l'une des revendications 1 à 3, **caractérisé en ce que** le matériau des premières parties (4a) est un métal de préférence magnétique doux et de préférence le fer, ou contient un tel métal.

5. Dispositif selon l'une des revendications 1 à 4, **caractérisé en ce que** le matériau des deuxièmes parties (4b) est une matière synthétique.

6. Dispositif selon l'une des revendications 1 à 5, **caractérisé en ce que** l'inducteur (1) présente des disques (6) qui sont disposés entre les bobines (3) coaxialement par rapport aux bobines (3) et qui forment le canal avec les bobines (3).

7. Dispositif selon la revendication 6, **caractérisé en ce que** la largeur des deuxièmes parties (4b) du tube (4) correspond à la largeur des bobines (3) ou est plus petite que cette largeur.

8. Dispositif selon l'une des revendications 1 à 7, **caractérisé en ce qu'**un deuxième moyen de guidage est un cylindre (5).

9. Dispositif selon la revendication 8, **caractérisé en ce que** le cylindre (5) est disposé dans le canal coaxialement par rapport aux bobines (3).

10. Dispositif selon les revendications 8 ou 9, **caractérisé en ce que** le dispositif présente entre le cylindre (5) et la surface d'une paroi intérieure du canal ou du tube (4a) un interstice qui permet d'insérer et de faire passer le produit (2) à façonner.

11. Dispositif selon l'une des revendications 8 à 10, **caractérisé en ce que** le cylindre (5) est un cylindre creux.

12. Dispositif selon l'une des revendications 8 à 11, **caractérisé en ce que** le cylindre (5) est réalisé en un matériau qui contient un métal magnétique doux et en particulier du fer.

13. Dispositif selon l'une des revendications 8 à 12, **caractérisé en ce que** le cylindre (5) est constitué d'une poudre métallique, d'une poudre frittée, de couches stratifiées et/ou est fendu longitudinalement.

14. Dispositif selon l'une des revendications 1 à 13, **caractérisé en ce que** la densité de courant électrique obtenue avec les bobines (3) est supérieure à J = 10 A/mm².

15. Dispositif selon l'une des revendications 1 à 14, **caractérisé en ce que** les bobines (3) présentent au moins en partie des conducteurs (7) dont la résistance spécifique ρ = 0,017 x 10⁻⁶ Ωm ou moins.

16. Dispositif selon l'une des revendications 1 à 15, **caractérisé en ce qu'**au moins certaines des bobines présentent des conducteurs qui sont supraconducteurs.

17. Dispositif selon la revendication 16, **caractérisé en ce que** les conducteurs supraconducteurs sont constitués d'un matériau dont la température de saut T est supérieure à 77 K.

18. Dispositif selon l'une des revendications 8 à 17, **caractérisé en ce que** le cylindre est maintenu par des moyens de maintien mécaniques et/ou électromagnétiques.
